# EUROPEAN PATENT APPLICATION

(11) **EP 2 645 532 A1**
(43) Date of publication of application: **02.10.2013**
(21) Application number: 12161826.8
(22) Date of filing: 28.03.2012
(51) Int. Cl.: H02J 13/00, F24D 11/00, G06Q 50/00, H02J 3/14

(54) **An intelligent electronic control and communications interface module for a thermal or electrical energy storage module grid, and methods for stored thermal or electrical energy and thermal or electrical energy storage capacity trading.**

(71) Applicant: Terafero bvba, 9000 Gent (BE)
(72) Inventor: De Graeve, Wim, 7880 Flobecq (BE)
(74) Representative: BiiP cvba

(57) **Abstract**

The present invention relates to an intelligent electronic control and communications interface module (2) for a thermal or electrical energy storage module (1) comprising means for bi-directionally communicating data between a thermal or electrical energy storage module (1) and a smart grid, wherein said data comprise data concerning the current status of the storage capacity, and requests to store thermal or electrical energy or to discharge thermal or electrical energy.

The present invention relates also to a thermal or electrical energy storage module comprising such intelligent electronic control and communications interface module.

Additionallly, the present invention relates to a thermal or electrical or combined electrical and thermal energy storage module grid.

Further, the present invention relates to a method of doing business comprising treating stored thermal and/or electrical energy, thermal and/or electrical energy storage capacity, and/or control priority thereof as a quantifiable tradable asset.

## Description

### FIELD OF THE INVENTION

The invention relates to an intelligent electronic control and communications interface module for a thermal or electrical energy storage module.

Further, the invention relates to a thermal or electrical energy storage module comprising an intelligent electronic control and communications interface module.

Additionally, the invention relates to a thermal or electrical energy storage module grid, and to a combined thermal and electrical energy storage module grid.

The invention relates also to a method for doing business comprising stored thermal and/or electrical energy trading, and to thermal and/or electrical energy storage capacity trading.

### BACKGROUND

Energy storage is an increasingly important part of the overall distributed system loosely referred to as the 'smart-grid'. A primary goal of smart-grid initiatives is to reduce the peak electrical power load on the grid system through intelligent distributed control of industrial and consumer appliances.

In the current grid configuration, almost no significant energy storage is present within the system, meaning that power generation must be very closely matched to consumption at all times, in order to keep voltage levels and other power-quality metrics within specified tolerances. However, increased grid-loading, ever more severe day/night fluctuations between base-load and peak-load, and other factors such as the poorly-predictable intermittency of renewable energy sources (e.g. wind and photovoltaics) combine to make the matching between generation and demand increasingly difficult.

Also, accurate generation/demand matching requires the use of highly-responsive generating plant which can be brought on-stream at very short notice, and a major disadvantage of this is that the marginal cost of operating such plant is much higher than that of less-responsive generation methods. Moreover, at these peak moments, electricity distribution companies must apply all possible resources to distribute this peak consumption while the grid itself has decreasing capacity because of (over)heating.

In addition, transmission losses increase both with ambient temperature and with capacity congestion, which due to the large power requirements of HVAC systems for cooling during hot periods means that transmission efficiency is lowest at more or less the same time that the demand itself reaches its maximum.

Global use of electrical energy is not predicted to reduce over the coming decades, but rather to grow in line with increasing population and affluence, and other socio-economic and industrial factors.

Thus reductions in peak load can only be achieved by time-shifting the transmission of power away from times of peak-demand, to less heavily-loaded periods. However, the opportunities for time-shifting of consumption are limited by strongly-ingrained societal use-patterns and habits, which considered together essentially preclude highly-effective consumption-smoothing over the 24-hour day/night cycle.

An additional problem is that new micro power sources such as domestic wind turbines and solar cells directly drive power in directions in the grid it was never designed for.

The combination of these factors generates pressing need for efficient, responsive, distributed and remotely manageable energy storage, enabling the time-of-generation and the time-of-consumption to be decoupled.

A few examples of attempts to fulfill this need are described below:
An example is the connection of large photovoltaic parks and wind parks with hydro-sites where wind turbines or solar cells directly drive water pumps to pump water in a high storage reservoir. A general problem here is power transport and limited capacity.
Another example are companies like Powertank providing solutions for storage of micro generation. A tank with phase change materials (PCM) allow to store thermal heat, produced by a heat pump or solar water heater, an use it at later stage for heating of the building. A problem however is that the capacity is very limited.
Another example are companies like Ice-energy providing unidirectional solutions (e.g. US2009093916). They provide energy storage modules making ice at night. At peak moments, the power company turns down large HVAC groups and use the cold stored in the ice to cool down the building. The power company avoids the use of expensive peaker plants and the grid operator simply cuts out peak loads. However control over the thermal energy storage module remains unidirectional, which makes that making use of the benefits of thermal energy storage can only be exploited at end-user site.

Considering the above, it is an object of the present invention to provide an intelligent electronic control and communications interface module for a thermal or electrical energy storage module, a thermal or electrical energy storage module comprising an intelligent electronic control and communications interface module, a thermal or electrical energy storage module grid, a combined thermal and electrical energy storage module grid, a method for doing business comprising stored thermal and/or electrical energy trading, and a method for doing business comprising thermal and/or electrical energy storage capacity trading, overcoming the above explained problems.

### SUMMARY

In a first embodiment in accordance with the present invention, a programmable intelligent control and communications interface module is provided enabling adaptable control as well as a near-real-time interface between a thermal or electrical energy storage module and a range of different components. The communications operates via bi-directional digital protocols operating over fixed and/or wireless links. Standard, proprietary and open-access control protocols can all be used to fulfill these functions. The intelligent control and communications interface modules may allow shared and prioritized control of the energy storage by two or more parties, and these priorities are adapted in a dynamic manner in response to the different parties' dynamically evolving needs. The programmable intelligent control and communications interface module allows the different parties determining and tailoring their activities on the status of the thermal or electrical energy storage modules.

Bi-directional communications and interfacing will typically be performed between the storage module and the Building Management System (BMS), Smart-Grid interfaces, Smart-meters, local climate-control and safety-related sensors and interlocks. Each of these components forms a node within a larger network, which will typically be accessed and managed by further nodes, at different hierarchical levels. This entire system in essence forms what is referred to as the "smart grid".

Information transmitted and received may typically include: Data concerning the current status of the storage capacity (how full or empty, current rate of charge/discharge); Data concerning both the current and the expected/predicted energy usage of the site where the storage is located; Current and expected local power tariffs; Requests to store thermal or electrical energy or to discharge thermal or electrical energy; Priority codes to determine the relative importance of various operational or power-management requests; and other data required for heuristics-based logic and decision engines, whether local or remote-based. Within previously-defined parameters and operating ranges, prioritization and the logical control functions can be determined and executed automatically. Also data on the storage modules physical location, data on energy efficiency upstream and downstream (e.g. storage module cooperating with a heat pump or organic rankine machine), data on carbon dioxide emission upstream and downstream may be included, data on the power generation plants and power distribution grids like load or efficiency or CO2 emissions or other performance data, meteo data, outlook data, use time window data, energy production time window data, geographical data, planned/unplanned event driven date, e.g. in case maintenance break, emergency.

In another embodiment, the present invention provides a thermal or electrical energy storage module comprising such intelligent control and communications interface module.

In accordance with the present invention, the thermal or electrical energy storage module may be any kind of module enabling thermal or electrical energy storage, such as water tanks, ice tanks, tanks including phase change materials (PCM), all kinds of electric capacitors, electrochemical battery devices and battery packs.

In an embodiment of the present invention, a thermal or electrical energy storage module grid, or a combined thermal and electrical energy storage module grid, may be provided comprising at least two and up to hundreds, or thousands, or preferably millions of storage modules in accordance with the present invention.

In a particular embodiment, such energy storage modules grid may comprise a server storing relevant data and comprising data-processing means, an algorithm and control means in order to control thermal or electrical energy storage modules linked to it.

In a further embodiment, a virtual power plant may be created comprising such thermal, electrical or combined energy storage module grid. Such virtual power plant may also be used as peaker plant.

The thermal or electrical energy storage module may be equipped, besides the intelligent electronic control and communications interface module, with a number of on-board sensors and status inputs/outputs. The interface module performs a number of functions, in essence serving as a condition and history tracking and reporting module. It includes data-processing and storage capabilities as well as a communications gateway module enabling connections to other devices or virtual environments via a hierarchical network structure.

Status monitoring of the stored energy can for example be accomplished by for example volumetric transdusers, pressure transducers, or current/voltage measurements, in conjunction with temperature and current/voltage sensing and logging of the energy conversion devices (e.g. heat-pumps, resistance heaters, rankine machines) used to 'load' the energy storage module.

It is equipped with a communications, monitoring and control interface unit, designed to cater for programmable autonomous operation as well as full interfacing to higher-level network and control elements. The Interface unit can utilize standard GSM networks such as HSPDA, G3, or other accessible methods.

In another embodiment, the present invention provides a method of doing business comprising treating stored thermal or electrical energy, thermal or electrical energy storage capacity, and/or control priority thereof as a quantifiable tradable asset.

An integrated system (i.e. the thermal or electrical, or combined thermal and electrical energy storage module grid) configured in the manner outlined above can be used to recurrently monetize, and thus increase the financial value of the energy storage capacity, either as a reserve of power which need not therefore be immediately transmitted via the grid at a time of high-demand, or as a vacant storage-opportunity which can be used to absorb under-demanded (and therefore potentially low offer-price) power during times when on-line generation capacity exceeds or risks exceeding real-time demand. Financial value may also be based on for example physical location of the storage module, or on energy efficiency and/or carbon dioxide emission upstream and/or downstream of the storage module.

Such an integrated energy storage module grid may be configured on in-house scale including any kind of in-house system capable of storing thermal or electrical energy, and up to regional, national, or international scale configurations.

In an alternative configuration, in-house systems or systems on site level capable of storing thermal and electrical energy may be controlled by one or several intelligent electronic control and communications interface modules, thereby forming a "distributed storage module" on house or site level, being connectable as one module to any energy storage module grid.

In another configuration, optionally in combination with the above configuration, different types of in-house systems or systems on site level capable of storing thermal energy and exchanging thermal energy at different working temperatures (e.g. a freezer storing cold and a boiler storing heat) may be controlled by one or several intelligent electronic control and communications interface modules, thereby forming a "hybrid storage module" on house or site level, being connectable as one module to any energy storage module grid. It is understood that different types of storage modules working at different working temperatures may also be incorporated in one system.The thermal or electrical energy storage capacity has value for several actors (e.g. the consumer, the generator, the distribution network operator and 'in-house' or independent energy traders. The actual value for any one of them, at any given time, is a highly dynamic and variable quantity however, and it will generally be different for the various different actors, at any one time.

Since the value of either the stored energy or the available storage capacity is generally different for different actors within the entire chain from generation to consumption, and given that these values change dynamically both in relative and absolute terms and with limited predictability, the stored thermal or electrical energy, and/or the energy storage capacity, and/or the access and control rights over it can be treated as tradable assets.

In accordance with the present invention, the step of treating control priority as a quantifiable tradable asset may comprise granting, rescinding, or transferring priority access rights on a time/bid/compensation basis, effectively creating both a primary market as well as potential secondary markets for the re-selling of stored capacity, storage capacity and/or control priority.

In accordance with the present invention, a software-based virtual marketplace may be provided for stored thermal or electrical energy trading and/or for thermal or electrical energy storage capacity trading. The marketplace may incorporate all the usual market transactional functions of bid/ask, settlement, title-transfer, validation, security etc. As both an input (status validation) function and output function (to change activity status) for each completed trade, the virtual environment acts as a prioritized access gateway, to interface directly with the buffer system, and to reassign the tradable asset in the appropriate way.

Many aspects of the trading process may be semi-automated or fully-automated, and programmed to respond to market offers and requests in specific ways individually set by the different parties involved. These responses to offers/requests, by virtue of being under near real-time control of adaptable automated systems, can also be designed and programmed to respond in dynamically-evolving ways, and to take into account a wide range of market-relevant information such as meteorological data (e.g. wind speed).

It is clear that the combination of the storage capacity with the intelligent communications and control interface module is necessary to both provide and to monitor the available-capacity in real-time, and thus to quantify the asset, whether it is to be traded as quantity of thermal or electrical energy, or as a quantity of available thermal or electrical energy storage, or as a combination of the two.

In a particular embodiment, the algorithm controlling the thermal or electrical energy storage module is adaptable based on the type of applied business method in accordance with the present invention, i.e. on contractual agreements between the different parties on the marketplace.

In emergency situations, e.g. a hospital urgently needs energy in an electric break down situation, these contractual agreements may be overruled by emergency services in charge, in which case the algorithm may be (remotely) adapted to the emergy situation.

### BRIEF DESCRIPTION OF THE DRAWINGS:

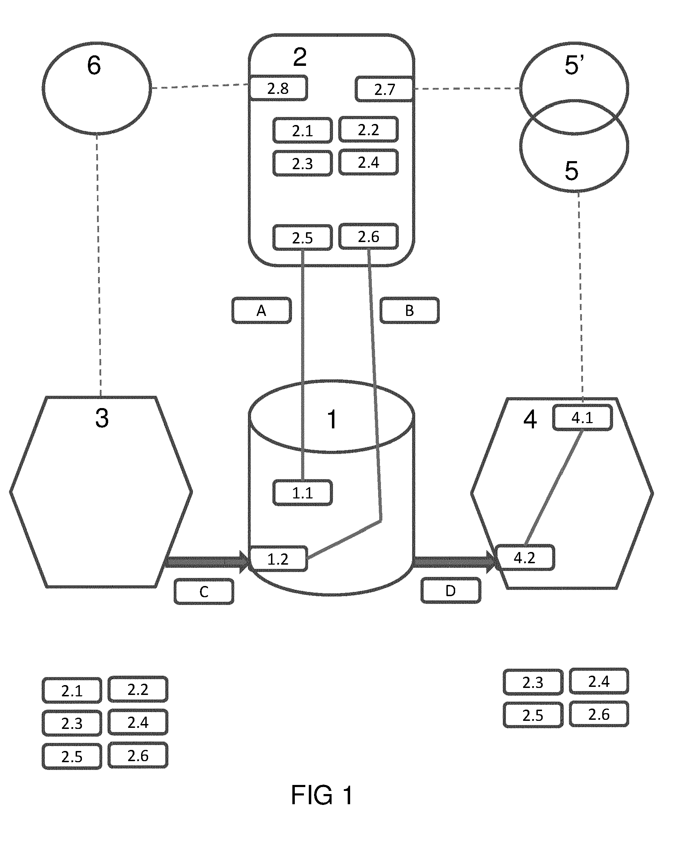

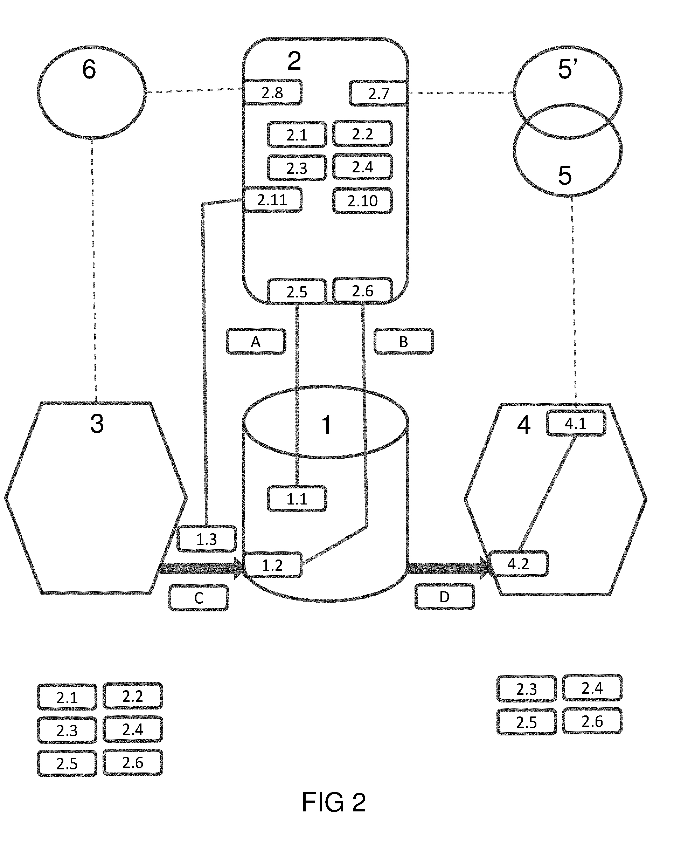

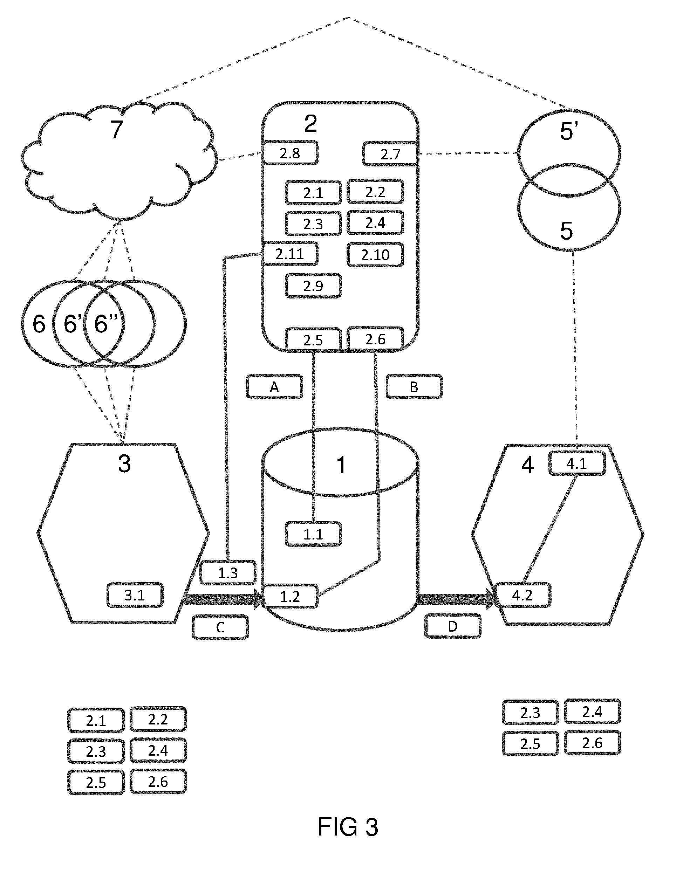

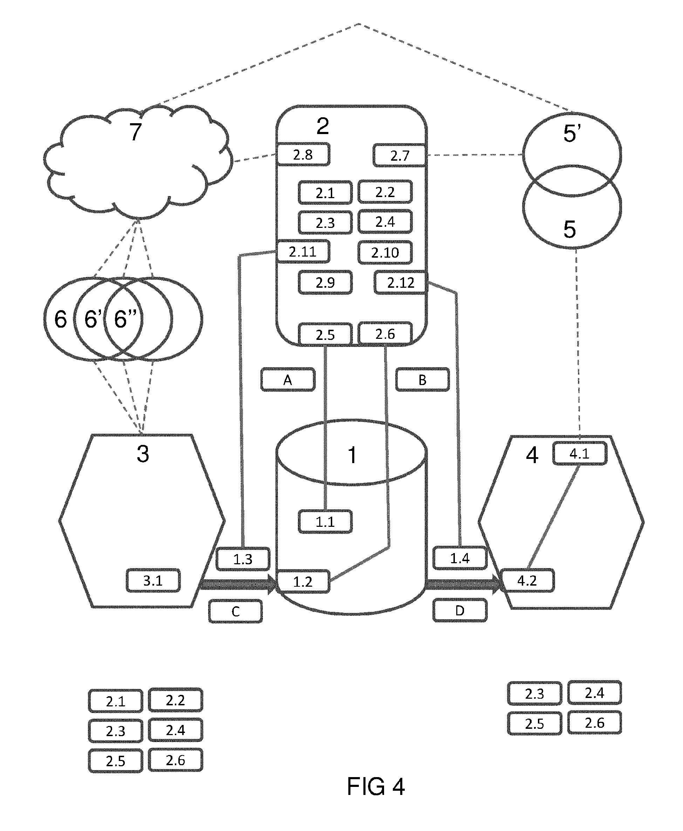

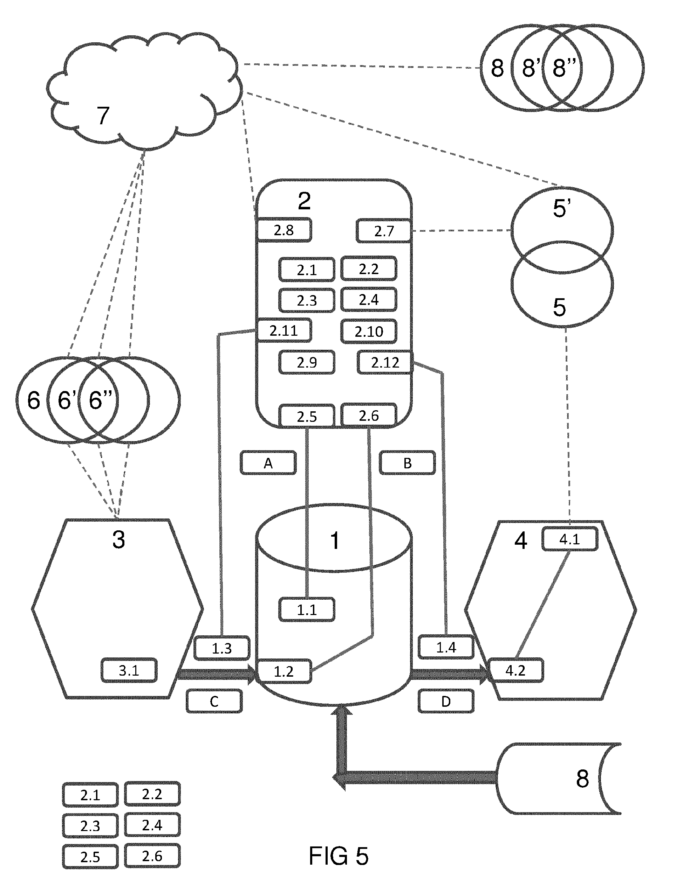

FIGS 1 to 5 illustrate several embodiments in accordance with the present invention.

### DETAILED DESCRIPTION:

Embodiments in accordance with the present invention are described below in more detail and illustrated by FIG 1 to 5.

The thermal or electrical energy storage module [1] might contain at least a storage capacity sensor [1.1], a switch load buffer [1.2], a thermal or electrical energy storage module supply meter [1.3],

The intelligent electronic control and communications interface module [2] might contain at least: a processor [2.1], a memory [2.2], an algorithm [2.3], a clock [2.4], a data connection to the storage capacity sensor [2.5], a contact load buffer [2.6], a user interface [2.7], a supplier interface [2.8], a public key infrastructure [2.9], a calendar [2.10], and a supply meter connection [2.11]

The user interface [2.7] can comprise any hardware and/or software that allows the user [5, 5'] to operate the intelligent electronic control and communications interface module [2]. This can be (not limitative example): an indication signal, an on/off switch, some sort of on board display and input device, a web based access with very advanced functionalities. Communication/operation between intelligent electronic control and communications interface module [2] and user [5, 5'] can be mono-directional and/or bi-directional.

The supplier interface [2.8], similar to the user interface [2.7], can comprise any hardware and/or software that allows the supplier [6] to communicate/operate the intelligent electronic control and communications interface module [2]. In general it should be situated in the type of connectivity and functionality as considered by the Smart Grid. Other types of interface are also possible.

The user interface [2.7] and the supplier interface [2.8] can be separate and/or can be partly/complete share hardware and/or software.

The thermal or electrical energy storage module [1] is connected to the intelligent electronic control and communications interface module [2] by a capacity communication link [A] between [1.1] and [2.5] and a supply communication link [B] between [1.2] and [2.6]. Communication links [A] en [B] can be made by any possible technology as for example wired communication, bus system communication, peer_to_peer wireless communication, web based communication.

In case of a thermal energy storage module, the thermal source [3] may be connected by a thermal energy supply pipe [C] to the thermal energy storage module [1] in order to supply thermal energy. The thermal energy storage module [1] will have some sort of heat/cold exchanger installed to exchange thermal energy supplied through thermal energy supply pipe [C]. The thermal user [4] can be connected by a thermal energy extraction pipe [D] from the thermal energy storage module [1] in order to extract thermal energy. The thermal energy storage module [1] will have some sort of heat/cold exchanger installed to exchange thermal energy extracted by thermal energy extraction pipe [D].The thermal user [4] will have a climate control system [4.1] installed. The latter can vary from (not limitative example) a simple on/off switch to some sort of programmable thermostat up till it a web accessible climate management system. It will also have at least a switch thermal energy [4.2] that is controlled by the climate control system [4.1].

In case of an electrical energy storage module, the electrical source [3] may be connected by an electical energy supply line [C] to the electrical energy storage module [1] in order to supply electrical energy. The electrical energy storage module [1] may be for example an electrochemical cell storing the electrical energy in the form of chemical energy. The electrical user [4] can be connected by an electrical energy extraction line [D] from the electrical energy storage module [1] in order to extract electrical energy. The electrical user [4] will have a electric power control system [4.1] installed.

Alternatively the switch load buffer [1.2] may be located on the thermal or electrical source [3] instead of on the thermal or electrical energy storage module [1]. Also a possible variation on the topology is that the switch thermal energy [4.2] is located on the thermal or electrical energy storage module [1] instead of on the thermal user [4].

The thermal source [3] may comprise any device that delivers thermal energy to the thermal energy storage module [1]. A non limitative list for heating includes oil fired boiler/burner, gas fired boiler/burner, electrical powered heat pump, city district steam network, process waste heat pipeline, etc. A non limitative list for cooling includes chillers, air coolers, ice machines, industrial cooling installation, domestic refrigators, etc.

The thermal user [4] is any kind of installation for delivery and/or distribution of thermal energy inside buildings. A non limitative list for heating includes air ducts, water pipes, steam pipes, convectors, air blowers, air vents, floor heating systems, wall heating systems, etc. A non limitative list for cooling includes air ducts, water pipes, freon pipes, convectors, air blowers, air vents, etc.

The electrical source [3] may comprise any device that delivers electrical energy to the electrical energy storage module [1], such as electrical power stations, wind energy plants, domestic windmills, photovoltaic cells, hybrid vehicles, etc.

The electrical user [4] is any kind of installation, machine, device, vehicle, etc consuming electrical energy.The user [5] is the person or the system that controls the climate conditioning equipment and systems installed at thermal user [4] through the climate control system [4.1], or that controls the electric power control system installed at the electrical user[4] The user [5'] is the person or the system that controls the intelligent electronic control and communications interface module [2] through the user interface [2.7]. User one [5] and user two [5'] can be the same person or system. They can also be different.

The supplier [6] is the community of energy generation and energy distribution companies that might supply any kind of energy and/or energy distribution services to the thermal or electrical source [3] and/or the thermal or electrical energy storage module [1]. The supplier may be also the domestic energy generator, e.g. via photovoltaic cell on his roof or via a domestic heat pump.

Some examples thereof are:
Example 1: the thermal source [3] is a heat pump owned by the user [5]; in this case the supplier [6] is the electricity company and electricity distribution company feeding electricity to the heat pump. The thermal energy thus is actually converted electricity.
Example 2: the thermal energy storage module [1] is a mobile thermal energy storage tank that tanks thermal energy somewhere else (for example, waste process heat) and then places it near to and connect it to the thermal user [4]; in this case the supplier [6] might be the company that owns/operates the thermal energy storage tanks.
Example 3: the thermal source [3] is a piping network that distributes process waste heat to one or more thermal energy storage module [1], One can consider a general thermal energy storage module [1] that is connected though piping to several other thermal energy storage modules [1]; in this case the supplier [6] can be the company or companies that owns/operates the piping network and generates the process waste heat. A specific case of this example is district heating. Here the thermal energy is steam generated especially for this purpose.
Example 4: the thermal source is a heat pump driven by green power (wind turbine or solar cells). Green electricity thus is actually upgraded by the heat pump due to the latter's high coefficient of performance (COP) and converted in thermal energy. Conversion of green electricity into thermal energy via heat pumps may be very beneficial in time periods wherein abundant green energy is available (in favorable meteorological conditions at base-load periods), but not consumed.
Example 5: the thermal source may be the lower temperature waste heat of an organic rankine machine, which is stored then for later use. The high temperature heat for driving the organic rankine machine may on its turn be delivered by a higher temperature thermal energy storage module. Clearly, the efficiency of this energy generating and storing configuration is extremely high compared to conventional methods.
Example 6: A cogeneration unit may be used as both thermal source and electrical source and coupled to a heat pump. The generated thermal energy may be stored in a thermal energy storage module, used for heating, or used as heat source for the subsequent heat pump. The generated electrical energy may be directly comsumed by whatever on-site equipment or by the subsequent heat pump, or may be fed to the electrical grid.

A specific variation of the described hardware is that the intelligent electronic control and communications interface module [2] comprises hardware and software mainly for communication to the virtual thermal or electrical, or combined thermal and electrical energy storage marketplace [7]. Intelligence and algorithms are all stored/executed then at the virtual marketplace [7].

When thousands/millions of thermal or electrical energy storage modules remotely traded/managed through the thermal or electrical energy storage marketplace [7] are considered, one can consider this as a thermal or electrical, or combined thermal and electrical energy storage module grid.

Thermal or electrical source [3], intelligent electronic control and communications interface module [2], thermal or electrical energy storage module [1] and thermal or electrical user [4] can be owned by different people/companies. Those different ownerships will have influence on the applicable methods (or combinations of use methods) and on the way invoicing will be done.

In a particular embodiment in accordance with the present invention the intelligent electronic control and communications interface module [2] may be the trusted link in case information of the thermal or electrical energy supply meter [1.3] and/or thermal or electrical energy extraction meter [1.4] is used for invoicing and that the required billing information is passed through the intelligent electronic control and communications interface module [2].

A specific way of using intelligent electronic control and communications interface module[2] and thermal or electrical energy storage module[1] is that a third party buys thermal or electrical energy from the suppliers, stores it in thermal or electrical energy storage module [1] and then supplies/sells later thermal or electrical energy to the user [5]. The thermal energy he buys might be invoiced to him on another unit of measure than the unit of measure he uses for invoicing the user [5]. For example he buys in kWh (for driving a heatpump) and sells in Joules. These thermal or electrical energy storage module[1] can be owned by that third party or they can be owned by someone else and in such case the third party user might pay a fee for thermal or electrical energy storage.

Below several exemplary embodiments of a method of doing business in accordance with the present invention are described. Each of these embodiments can be applied in the context of thermal energy storage, electrical energy storage, or a combination of thermal and electrical energy storage

### Basic low cost method (off peak):

The storage capacity sensor [1.1] can be a simple thermometer indicating temperature of the thermal energy storage module [1]. Low and high thermal energy capacity limits of the thermal energy storage module [1] in this case are low and high temperature threshold of the thermal energy storage module [1] that must be set in the intelligent electronic control and communications interface module [2] memory [2.2]. The algorithm [2.3] of the intelligent electronic control and communications interface module [2] is set/selected by the user [5] to load thermal energy as much as possible at time windows when supply cost is low. This can be done by setting general low cost time windows in the memory [2.2] and/or in the clock [2.4]. This can also be captured dynamically by a low cost signals send buy the supplier [6] through his communication network and captured by the supplier interface [2.8]. It is also possible that the user [5] sets a value for thermal energy cost threshold in the memory [2.2], in this case the processor [2.1] will analyze the captured thermal energy cost signal and compare it with the thermal energy cost threshold set point. The processor [2.1] will monitor and process mentioned data. At a certain moment the intelligent electronic control and communications interface module [2] will give through the contact load buffer [2.6] a signal to the switch load buffer [1.2] to start supplying thermal energy to the thermal energy storage module [1]. The thermal source [3] will notice that the switch load buffer [1.2] is on and will supply thermal energy to the thermal energy storage module [1] though the thermal energy supply pipe [C]. The switch load buffer [1.2] might also directly activate the supply of thermal energy by the thermal source [3]. The processor [2.1] will monitor the thermal energy storage module [1] temperature. Once the high temperature threshold is reached the intelligent electronic control and communications interface module [2] will cut the contact load buffer [2.6] off, thus cuts the switch load buffer [1.2] off, and the supply of thermal energy to the thermal energy storage module [1] stops. The thermal energy storage module [1] is now fully loaded with low cost thermal energy.

The thermal user [4] will periodically or continuously extract thermal energy from the thermal energy storage module [1] through the thermal energy extraction pipe [D] following the command of the climate control system [4.1] activating the switch thermal energy [4.2]. As long as the temperature of the thermal energy storage module [1] remains above the set low temperature threshold the intelligent electronic control and communications interface module [2] will not react. If temperature of the thermal energy storage module [1] falls below the set low temperature threshold the intelligent electronic control and communications interface module [2] will give through the contact load buffer [2.6] a signal to the switch load buffer [1.2] to start loading thermal energy. Depending on the complexity of the algorithm [2.3] this might be only up till the temperature of the thermal energy storage module [1] is up a few degrees in case the intelligent electronic control and communications interface module [2] considers that it is no valid low cost supply. In case the algorithm [2.3] is not that complex it might simply load the thermal energy storage module [1] up to its high temperature threshold thus loosing the low cost benefit. Many variations on this algorithm are possible. The essence is that it tries to load thermal energy when cost price is low (off peak). The basic use method, within a considered time period with low cost supply moments, will supply always the maximum amount of thermal energy to the thermal energy storage module [1] as defined by the high threshold set point thus creating unnecessary energy losses because of leakage of thermal energy by the thermal energy storage module [1] since.

The storage capacity sensor [1.1] can be a sensor that gives another value that is indicative for the amount of thermal energy loaded in the thermal energy storage module [1]. It may be considered also an indication for the amount of thermal energy that still can be loaded or in other words the available thermal storage capacity. In this case the intelligent electronic control and communications interface module [2] has to consider a conversion factor or a conversion chart stored in the memory [2.2] to calculate.

The storage capacity sensor [1.1] can be a sensor that gives direct value of the amount of stored thermal energy in the thermal energy storage module [1]. In this case the intelligent electronic control and communications interface module [2] simply has set with absolute values and consider absolute values.

### Calendar Capacity method:

Because of seasonal variations, the amount for thermal energy that will be extracted from the thermal energy storage module [1] (or needs to be supplied to the thermal energy storage module [1]) in a certain time period will vary. By matching the amount of thermal energy supplied to the thermal energy storage module [1] to an estimated/predicted amount of extracted thermal energy. This will minimize the thermal energy losses.

The intelligent electronic control and communications interface module [2] can maintain a calendar [2.10] that indicates the estimated/predicted amount of thermal energy that will be extracted in a given time period. This calendar [2.10] can be set by the user [5]. This input can consider all kinds of expected variations like day/night, week-ends, holidays, special use events, .... Another way to create this calendar [2.10] is analysis of the thermal energy use in the previous days/weeks/months. It can also be created partly or entirely by historical data captured and analyzed by the intelligent electronic control and communications interface module [2]. By also considering external info like weather forecast, fed to the intelligent electronic control and communications interface module [2] through the interfaces [2.8] and/or [2.7], the estimated/predicted amount of thermal energy that will be extracted can be more precise.

In case the storage capacity sensor [1.1] is simply a thermometer a relation chart temperature/stored thermal energy can be set in the memory [2.2]. By now considering the calendar [2.10] and the amount of stored thermal energy the intelligent electronic control and communications interface module [2] knows whether the thermal energy storage module [1] needs supply of thermal energy or not and it can monitor/control the supply until the desired amount of thermal energy is loaded.

A special situation is when supply and extraction of thermal energy to and from the thermal energy storage module [1] happens at the same time, the storage capacity sensor cannot separate how much thermal energy is supplied and how much thermal energy is extracted from the thermal energy storage module [1] as supply and extraction might be variable. In this case it might be required to install a thermal energy storage module supply meter [1.3] somewhere along the thermal energy supply pipe [C] or somewhere around the thermal source [3] and feed the information of the meter to the intelligent electronic control and communications interface module [2]. This can be done through a separate thermal energy storage module supply meter connection [2.11] or through another data connection point like for example the data connection to the thermal energy storage module [2.5]. The thermal energy storage module supply meter [1.3] can also be integrated in the thermal energy storage module [1] itself.

The extraction of thermal energy from the thermal energy storage module [1] within one estimation/prediction period will be in several blocks. Low cost windows within one estimation/prediction period may be provided. So the supply of thermal energy to the thermal energy storage module [1] in one period might also be in several blocks. In this case the intelligent electronic control and communications interface module [2] could maintain a table with blocks of supplied thermal energy within the actual estimation/prediction period.

The way that the intelligent electronic control and communications interface module [2] commands the thermal energy storage module [1] and/ or thermal source [3] for loading thermal energy happens as described in the basic use method.

### Competitive bid method:

Although not explicit mentioned, in both the basic low cost method and the calendar capacity method, it is implicit supposed that the supplier [6] is known. It is simply a question of consumption at moments of low cost supply. In both methods the supplier [6] will monitor (or a third party on behalf of the supplier [6]) the time and/or the amount of energy and/or energy related services supplied to the thermal energy storage module [1] and thus through the thermal energy storage module [1] to the thermal user [4]. The third party monitoring the supply is typically a metering company using a third party supply meter [3.1].

Now consider a competitive market of suppliers [6]. As (most of) these markets have been liberalized there are multiple suppliers offering energy and energy related services at the same time. So it becomes interesting for the thermal user [4] not only to look for low cost windows but also to look for the most competitive supplier [6] at any given moment. It is quite possible that one supplier [6].offers very low cost energy and or energy services at a certain window while others don't.

The intelligent electronic control and communications interface module [2].can publish supply demand blocks on a thermal energy storage marketplace [7] for the supply of a certain amounts of thermal energy and related services in a certain time window. The amounts of thermal energy to be supplied and the length of the related time windows can vary from a few minutes to months or even years. Several suppliers [6/6'/6"] that are also connected to the thermal energy storage marketplace [7] can see this and make a bid to the intelligent electronic control and communications interface module [2]. The algorithm [2.3] will evaluate the bids and grants the supply to a supplier [6]. The identity of the user [5] is given to the suppliers [6/6'/6"] by giving them a public key infrastructure [2.9] that is associated with a third party supply meter [3.1] or by giving them directly in a secured environment the reference of the third party supply meter [3.1]. This allows the final supplier [6] to invoice the user [5] for the delivery of the energy and/or related services.

In case of large demand blocks suppliers [6/6'/6"] might post bids in consortium. The user [5] can set all related parameters in the intelligent electronic control and communications interface module [2] so that the negotiating and handshaking is an automated process.

The user [5] might also have direct access to the thermal energy storage marketplace [7] for example through a web interface, he might post a supply demand block and unveil his identity through publishing a public key infrastructure [2.9] that is associated with a third party supply meter [3.1] or by giving them directly in a secured environment the reference of the third party supply meter [3.1]. Now suppliers [6/6'/6"] can post bids and the user [5] will manually grant the bid through the thermal energy storage marketplace [7]. The unveiling of the identity could also be done after the granting. After the granting the user [5] should put the intelligent electronic control and communications interface module [2] in a mode according to the granting. The thermal energy storage marketplace could also send the necessary information to the intelligent electronic control and communications interface module [2] after the manual granting so that the intelligent electronic control and communications interface module [2] automatically is set according the granting.

In a reverse approach suppliers [6/6'/6"] can post supply offer blocks on the thermal energy storage marketplace [7]. Connected intelligent electronic control and communications interface module [2] and/or visiting users [5] will accept bids and consequently thus define the relevant parameters of the intelligent electronic control and communications interface module[2].

### Extraction metering method:

Multiple thermal user [4] (having different users [5]) may be connected to a thermal energy storage module [1]. The thermal energy storage module [1] is owned by a third party or by a supplier [6]. The invoicing thus cannot be based on supply of thermal energy to the thermal energy storage module [1] but rather on thermal energy extracted from the thermal energy storage module [1]. In this case a thermal energy extraction meter [1.4] between the thermal energy storage module [1] and the thermal user [4] is provided communicating the amount of extracted thermal energy to the intelligent electronic control and communications interface module [2], this information then can be forwarded by the intelligent electronic control and communications interface module [5] to the owner of the thermal energy stored in the thermal energy storage module [1] and used for invoicing.

### Reserved capacity method:

In many occasions the thermal user [4] is not only a user of thermal energy but also an occasional small supplier further referred to as local thermal energy source [9]. This can be for instance hot water produced by solar thermal or electricity produced by photovoltaics that is not consumed immediately on site. These local thermal energy sources [9], might be managed by a kind of home energy management system. The intelligent electronic control and communications interface module [2] might know/predict the amount of thermal energy that will be supplied to the thermal energy storage module [1] on the basis of set values by the user [5] or on the basis of historical data and external feeds like weather forecast or based upon any other kind of relevant information. In such situation the intelligent electronic control and communications interface module [2] might reserve thermal energy storage capacity for the local thermal energy source [8] and only loads the remaining thermal energy need for the thermal source [3].

### Dump method:

A specific case is moments where abundant thermal energy is available on the grid. In such case one might consider a mode where the supplier [6] can dump this thermal energy in the thermal energy storage module [1] by controlling the intelligent electronic control and communications interface module [2] and the contact load buffer [2.6], at certain conditions agreed upfront with the user [5].

### Aggregation method:

Thermal energy storage modules [1] present themselves individually on the thermal energy storage marketplace [7] through the intelligent electronic control and communications interface module [2]. It is also possible that many different thermal energy storage module [1] aggregate and act as one consolidated thermal energy storage module [1] on the marketplace. When negotiation and handshaking is done with an aggregation, the supplier [6] can manage/supply all individual thermal energy storage module [1] within the conditions agreed. This for example would allow a supplier [6] to feed the first 20% of thermal energy storage module [1] the first two hours, the next 20% the next two hours, and so on.

### Location based method:

The intelligent electronic control and communications interface module [2] might provide information to the thermal energy storage marketplace [7] on the physical location of the thermal energy storage module [1], This information can come from any possible source (e.g. inputted in memory [2.2], GPS). This might be used by suppliers [6] to geographically spread/manage the supply of energy in the view of their demand management systems.

### Efficiency based method:

The intelligent electronic control and communications interface module [2] might provide information to the thermal energy storage marketplace [7] on the efficiency of the supplier supplying energy to the thermal energy storage module, on the efficiency of the thermal energy storage module (e.g. whether it is connected to a heat pump or an organic rankine machine), on the efficiency of the thermal user, etc. In this case the algorithm, whether it is stored in the interface module or a server linked to the storage module, may for example try to load thermal energy from suppliers with high energy efficiency. In another example, price setting of thermal energy storage capacity may be based on the energy efficiency factor. This energy efficiency factor can dynamically vary during the day and price setting may be based then on prediction of the energy efficiency factor.

### Carbon dioxide emission based method:

The intelligent electronic control and communications interface module [2] might provide information to the thermal energy storage marketplace [7] on the CO2 emission of the supplier supplying energy to the thermal energy storage module, on the CO2 emission of conversion from supplied energy to thermal energy, on the CO2 emission of the thermal user, etc. In this case the algorithm, whether it is stored in the interface module or a server linked to the storage module, may for example try to load thermal energy from suppliers with low CO2 emission. In another example, price setting of consumed energy may be based on optimization of CO2 emission.

As demand and bids of thermal energy on the thermal energy storage marketplace [7] meet very much in a way that demands and bids of commodities meet on marketplaces, all kinds of derivate products/practices like puts, calls, shorting, dumping, etc can be done by suppliers [6],users [5] .

## Claims

1. An intelligent electronic control and communications interface module for a thermal or electrical energy storage module comprising means for bidirectionally communicating data between a thermal or electrical energy storage module and a smart grid, wherein said data comprise data concerning the current status of the storage capacity, and requests to store thermal or electrical energy or to discharge thermal or electrical energy.

2. An intelligent electronic control and communications interface module according to claim 1, wherein said data further comprise data concerning both the current and the expected/predicted energy usage of the site where the thermal or electrical energy storage module is located, and/or data concerning current and expected local electric power tariffs, and/or priority codes to determine the relative importance of various operational or power-management requests, and/or data required for heuristics-based logic and decision engines.

3. A thermal or electrical energy storage module comprising an intelligent electronic control and communications interface module according to the above claims.

4. A thermal or electrical energy storage module according to claim 3, being controlled by an algorithm which is adaptable based on carbon dioxide emission optimization, or on energy efficiency.

5. A thermal and/or electrical energy storage module grid comprising thermal and/or electrical energy storage modules according to claim 4.

6. A thermal or electrical energy storage module grid according to claim 5, comprising a server having data-processing means, an algorithm, and control means in order to control the thermal and/or electrical energy storage modules linked to it.

7. A virtual power plant comprising a thermal and/or electrical energy storage module grid according to claims 5 or 6.

8. A method of doing business comprising treating stored thermal and/or electrical energy, thermal and/or electrical energy storage capacity, and/or control priority thereof as a quantifiable tradable asset.

9. A method of doing business according to claim 8, wherein treating control priority as a quantifiable tradable asset comprises granting, rescinding, or transferring priority access rights on a time/bid/compensation basis.

10. A method of doing business according to claims 8 to 9, comprising providing a software-based virtual marketplace for stored thermal and/or electrical energy trading and/or for thermal and/or electrical energy storage capacity trading.

11. A method of doing business according to claims 8 to 10, wherein price setting of the tradable asset is based on carbon dioxide emission optimization, or on energy efficiency.

12. A method of doing business according to claims 8 to 11, wherein thermal or electrical energy is stored in a respective thermal or electrical energy storage module controlled by an algorithm and wherein said algorithm is adaptable based on carbon dioxide emission optimization, or on energy efficiency.
